(19) Europäisches Patentamt
European Patent Office
Office européen des brevets

(11) **EP 3 760 997 B1**

(12) **EUROPÄISCHE PATENTSCHRIFT**

(45) Veröffentlichungstag und Bekanntmachung des Hinweises auf die Patenterteilung:
**16.02.2022   Patentblatt 2022/07**

(21) Anmeldenummer: **20182009.9**

(22) Anmeldetag: **24.06.2020**

(51) Internationale Patentklassifikation (IPC):
***G01M 3/28*** *(2006.01)*

(52) Gemeinsame Patentklassifikation (CPC):
**G01M 3/2815**

(54) **VERFAHREN UND MESSVORRICHTUNG ZUR DICHTHEITSPRÜFUNG VON WASSERLEITUNGEN**

METHOD AND MEASURING DEVICE FOR LEAK TESTING OF WATER PIPES

PROCÉDÉ ET DISPOSITIF DE MESURE PERMETTANT DE VÉRIFIER L'ÉTANCHÉITÉ DE CONDUITES D'EAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.07.2019   DE 102019117859**

(43) Veröffentlichungstag der Anmeldung:
**06.01.2021   Patentblatt 2021/01**

(73) Patentinhaber: **Esders GmbH**
**49740 Haselünne (DE)**

(72) Erfinder: **Esders, Bernhard**
**49770 Dohren (DE)**

(74) Vertreter: **Deters, Frank et al**
**Busse & Busse Patent- und Rechtsanwälte**
**Partnerschaft mbB**
**Grosshandelsring 6**
**49084 Osnabrück (DE)**

(56) Entgegenhaltungen:
**US-A1- 2005 056 081     US-A1- 2013 081 449**

**Beschreibung**

Die vorliegende Erfindung bezieht sich auf ein Verfahren zur Dichtheitsprüfung von definierten Leitungsabschnitten von Wasserleitungen, deren Rohrleitungen aus einem viskoelastischen Material bestehen, indem dem zu prüfenden Leitungsabschnitt bis zur Erreichung eines Prüfdruckes Wasser zugeführt, der Druck in dem zu prüfenden Leitungsabschnitt gemessen und der Druckverlauf im Leitungsabschnitt in der Ruhephase als Funktion über die Zeit registriert und der dabei auftretende Druckabfall mit einem erwarteten Druckverlauf unter Berücksichtigung des in dem zu prüfenden Leitungsabschnitt vorhandenen Luftvolumens verglichen wird.

Die Erfindung bezieht sich auch auf eine Messvorrichtung zur Dichtheitsprüfung von definierten Leitungsabschnitten von Wasserleitungen, deren Rohrleitungen aus einem viskoelastischen Material bestehen, mit einer Fördervorrichtung zur Zuführung von Wasser in den zu prüfenden Leitungsabschnitt und einer Druckmessvorrichtung zur Messung des aktuellen Drucks in dem zu prüfenden Leitungsabschnitt.

Aus der Schrift US 2005/056081 A1 ist es für die Detektion von Gas, das aus einem Messobjekt austritt, bekannt, der Messkörper mit Luft zu befüllen und mit einer Rechnereinheit die Gasverlustmenge zu berechnen. Die Berechnung erfolgt auf Basis der Druckdifferenz, die von einer Differentialdruckmessvorrichtung gemessen wird, und dem Innenvolumen des Messkörpers, das eingegeben oder gemessen wird. Der Einfluss der Kompressibilität des Füllgases, die messdruckabhängige Volumenaufweitung des Messkörpers aus einem viskoelastischen Material über die Messdauer hinweg und der daraus resultierende Fehler bei der Ermittlung der Leckmenge werden in dieser Schrift nicht thematisiert.

Die Schrift US 2013/081449 A1 befasst sich mit der Leckerkennung in Leitungen zur Beförderung von flüssigen Medien. Anstelle von an Bändern gehaltenen Messkörpern sollen "Monitore" verwendet werden, die mit der in der Leitung beförderten Flüssigkeit durch die Leitungen gespült werden.

Bei Wasserleitungen ist es erforderlich, die Dichtheit zu gewährleisten und zu prüfen. Bei der Dichtheitsprüfung wird der Druckverlust in einem Zeitintervall in einer abgeschlossenen, unter Überdruck befindlichen Leitung gemessen und bewertet. Der Kern des bekannten Messverfahrens besteht aus den Schritten:

-   Erhöhung des Drucks in der Leitung bis auf einen Prüfdruck durch Zuführung einer entsprechenden Wassermenge,

-   Einhaltung einer Druckhaltephase, in der geprüft wird, ob die Leitung den Prüfdruck halten kann, und

-   Einhaltung einer Ruhephase, in der der Druckverlust während der Dauer der Ruhephase gemessen wird.

Aus dem Druckverlust in der Ruhephase wird dann ermittelt, ob der geprüfte Leitungsabschnitt dicht ist oder nicht.

In den auf Dichtheit zu prüfenden Wasserleitungen befindet sich meistens ein gewisser Volumenanteil von Luft, durch den die Messung verfälscht werden könnte. Um den Luftanteil zu bestimmen, der sich in einem auf Dichtheit zu überprüfendem Abschnitt einer Wasserleitung befindet, wird im Stand der Technik zusätzlich noch ein Ablasstest durchgeführt. Hierbei wird der Druck in der Wasserleitung um einen vorgegebenen Wert abgesenkt und die dafür erforderliche Wassermenge registriert. Aus der Druckänderung kann bei bekannten Leitungsdaten auf die enthaltene Luftmenge geschlossen werden. Das Arbeitsblatt W 400-2 des Deutschen Vereins des Gas- und Wasserfaches e. V. - dem DVGW - schreibt einen Grenzwert für einen Druckabfall im Verlauf einer Messung vor, was einer Deckelung des bei einer Messung maximal in der Wasserleitung zugelassenen Luftvolumens gleichkommt. Häufig wird zuerst der Ablasstest durchgeführt, um zu ermitteln, ob sich weniger als die maximal zulässige Luftmenge in der Wasserleitung befindet, um nicht die Zeit für eine Dichtheitsprüfung aufzuwenden, bei der sich später herausstellt, dass diese wegen eines zu hohen Luftvolumens ungültig ist.

Neben der Druckverlustmethode ist auch die Wasserverlustmethode bekannt, bei der der Wasserverlust in einem Zeitintervall gemessen und bewertet wird. Weil die für eine solche Messung erforderlichen Präzisionspumpen sehr kostenaufwendig sind, ist dieses Verfahren eher unüblich.

Die vorstehenden Verfahren können bei starren oder elastischen Leitungen durchgeführt werden, für die mittels zusätzlich registrierter Daten über die Leitungslänge, ihre Dimensionierung mit ihrem Rohrvolumen, die Elastizität der Leitung und die vorhandene Luftmenge und dem gemessenen Druckverlust ein Wasserverlust ausreichend genau errechnet werden kann. Diese Messverfahren scheitern aber an zu großen Ungenauigkeiten, wenn die Dichtheit von Leitungen, die aus viskoelastischen Materialien hergestellt sind, anhand des vorstehend beschriebenen Verfahrens geprüft werden soll. Wenn der Druck im Innenraum einer solchen viskoelastischen Leitung im Rahmen einer Dichtheitsmessung erhöht wird, folgt die dabei auftretende Ausdehnung der Leitung der Form einer Transiente. Daraus resultiert ein Druckverlust in der Leitung, für den zunächst unklar ist, ob dieser auf das Dehnungsverhalten des viskoelastischen Materials der Leitung oder auf eine Undichtigkeit in der Leitung zurückzuführen ist. Um gleichwohl auch bei Wasserleitungen aus einem viskoelastischen Material Dichtheitsmessungen vornehmen zu können, behilft sich die Praxis bisher mit einem zusätzlichen Kontraktionstest, bei dem der Druckverlauf in der Wasserleitung während des Ablasstests zusätzlich beurteilt wird, und zwar insbesondere nach dem Wiederverschließen der Wasserleitung nach dem Ablassen einer Wassermenge. Die dabei eintretende Kontraktion der Wasserleitung führt zu einem messbaren Druckanstieg, der Rückschlüsse auf die Dichtheit des viskoelastischen Materials zulässt. Das Ergebnis dieser zusätzlichen Messung ist aber sehr ungenau.

Schon die Dichtheitsprüfung nach der einfachen Druckverlustmessung verursacht einen erheblichen Zeitaufwand, der mit entsprechend hohen Kosten einhergeht. Durch den zusätzlichen Kontraktionstest erhöht sich der Zeitaufwand für die Dichtheitsprüfung von Wasserleitungen aus viskoelastischen Materialien nochmals deutlich. Trotz des hohen zeitlichen Messaufwands bleiben die dabei erzielten Messergebnisse ungenau.

Es ist die Aufgabe der vorliegenden Erfindung, das Messverfahren und die Messvorrichtung für eine Wasserleitung aus einem viskoelastischen Material zu vereinfachen und dabei die Genauigkeit bei der Messung der Dichtheit einer Wasserleitung zu erhöhen.

Die Aufgabe wird für ein gattungsgemäßes Verfahren gelöst, indem im Messverlauf ein Kontraktionstest mittels einer Simulation von im Zeitverlauf zu erwartenden materialbedingten Volumenveränderungen mit einem System von das Kontraktionsverhalten von viskoelastischen Materialien beschreibenden Differentialgleichungen durchgeführt wird.

Die Aufgabe wird für eine gattungsgemäße Messvorrichtung gelöst, indem die Messvorrichtung eine elektronische Recheneinheit aufweist, die mit der Druckmessvorrichtung verbunden ist und die eine Software aufweist, die über die Verbindung die von der Druckmessvorrichtung während eines Messverlaufs ermittelten Druckwerte ausliest, zwischenspeichert und verarbeitet, wobei die Software eine Programmierung aufweist, die im Messverlauf einen Kontraktionstest mittels einer Simulation von im Zeitverlauf zu erwartenden materialbedingten Volumenveränderungen mit einem System von das Kontraktionsverhalten von viskoelastischen Materialien beschreibenden Differentialgleichungen durchführt.

Die Messvorrichtung kann als ein kompakter Messkoffer ausgeführt werden, der mit den in ihm eingebauten Komponenten die Durchführung der Dichtheitsprüfung ermöglicht.

Durch die rechnergestützte Simulation eines Kontraktionstests wird rechnerisch ermittelt, welche Volumen- und Druckänderungen sich in dem zu prüfenden Leitungsabschnitt aus dem druckabhängigen Dehnungs- und Schrumpfungsverhalten des viskoelastischen Materials und nicht aus einem eventuellen Leck des zu prüfenden Leitungsabschnitts ergeben. Das jeweilige Material, aus dem die Wandung des zu prüfenden Leitungsabschnitts hergestellt ist, kann mit materialspezifischen Daten bei der Simulation berücksichtigt werden. Es wird also nicht mehr nur ein materialunspezifisch gemessener Druckanstieg in dem Leitungsabschnitt als Bemessungsgröße verwendet, um den Einfluss des Schrumpfungsverhaltens des viskoelastischen Materials auf den Druckverlauf innerhalb des Leitungsabschnitts zu schätzen, sondern es ist möglich, produktspezifische Daten bei der Simulation einfließen zu lassen. So können als Daten konkrete Informationen verwendet werden, die sich beispielsweise auf den Innen- und Außendurchmesser des im Leitungsabschnitt vorhandenen Rohres, die Dicke der Wandung, das Dehnungs- und Schrumpfungsverhalten des spezifisch verwendeten Materials, die druckabhängigen Geschwindigkeiten der Dehnungs- und Schrumpfungsbewegungen über ein Zeitintervall gesehen, alterungsbedingte Veränderungen dieser Daten und dergleichen beziehen können. Auf Basis dieser Daten ist eine viel genauere Aussage möglich, welchen Einfluss das Dehnungs- und Schrumpfungsverhalten auf Druckveränderungen im zu prüfenden Leitungsabschnitt während einer Druckmessung hat.

Die aus den Bewegungen des viskoelastischen Materials herrührenden Druckveränderungen können nach der erfolgten Simulation aus den gemessenen Druckveränderungen herausgerechnet werden, so dass eventuelle leckbedingte Druckverluste genauer erkannt oder ausgeschlossen werden können. Eventuelle Fehler, die sich aus der bloßen Auswertung von gemessenen Druckveränderungen ohne eine genauere Berücksichtigung von Druckveränderungen, die aus den Bewegungen des viskoelastischen Materials herrühren, werden so vermieden.

Die Simulation liefert nicht nur genauere Werte, als das bei einer bloßen Messung des Druckanstiegs möglich ist, die Messung selbst wird durch die Simulation auch viel schneller. Durch den möglichen Verzicht auf den Kontraktionstest ergibt sich eine erhebliche Zeiteinsparung. Eine Messung wird dadurch auch deutlich günstiger, weil sich der dafür erforderliche Personalaufwand verringert. Durch die genauere Messung ergeben sich für den Netzbetreiber des Wasserleitungsnetzes Vorteile, weil ihm nicht mehr so leicht eine Wasserleitung als schadhaft gemeldet wird, die das tatsächlich nicht ist, und kleine Löcher bei der Dichtheitsprüfung nicht mehr übersehen werden, bei deren nun früher möglichen Reparatur geringere Wassermengen als mit der herkömmlichen Technik verloren gehen und erforderliche Reparaturen besser geplant und durchgeführt werden.

Wenn ein abgeschlossener Leitungsabschnitt auf seine Dichtheit geprüft werden soll, sind beim Betreiber des Leitungsnetzes auf diesen Leitungsabschnitt bezogene leitungsspezifische Informationen häufig bekannt. Ein Betreiber eines Wasserleitungsnetzes hat im Normalfall historische Aufzeichnungen darüber, an welcher Stelle er wann welches Rohrleitungsmaterial verlegt hat. Das trifft insbesondere auf Leitungsabschnitte zu, die aus einem viskoelastischen Material hergestellt sind. Solche Leitungsabschnitte wurden erst in jüngerer Zeit verlegt, da davor das Material nicht anerkannt war, oder es handelt sich um neu verlegte Leitungsabschnitte, für die dann die Dimension und das Material des Leitungsabschnitts bekannt sind. Häufig sind dort auch Datenblätter oder sonstige technischen Informationen hinterlegt, denen sich weitere produktspezifische Informationen entnehmen lassen, die für die Simulation des Kontraktionstests erforderlich sind. So sind zumindest einige der Informationen, die für die Durchführung einer Simulationsrechnung benötigt werden, schon bei der Auftragsvergabe bekannt und können der Person, die den Leitungsabschnitt auf Dichtheit prüft, vor der Dichtheitsprüfung verfügbar gemacht werden. Diese Informationen können dann in der Messvorrichtung bei Durchführung der Messung vorgehalten und verarbeitet werden.

Weitere materialspezifische Informationen über ein viskoelastisches Material, die für die Simulation benötigt werden, kann sich die Person, die die Messung durchführt, auch vor Ort im Rahmen der Prüfung beschaffen und in die Messvorrichtung eingeben. So sind die Außenumfangsflächen von Rohrleitungen häufig mit Beschriftungen versehen, denen sich Informationen über den Hersteller und das verwendete Material entnehmen lassen. Solche Informationen können dazu dienen, Zugriff auf weitere materialspezifische Informationen zu erhalten, wie beispielsweise von einer Datenbank, die ein Hersteller einer Rohrleitung für sein Produkt zur Information seiner Kunden bereithält. So können schon vor der Durchführung einer Prüfung der Dichtheit einer Rohrleitung viele materialspezifische Informationen über das viskoelastische Material der zu prüfenden Rohrleitung zusammengestellt und bereitgehalten werden, die die Simulation überhaupt erst ermöglichen oder in ihrer Qualität verbessern.

Bei dem erfindungsgemäßen Verfahren wird weiterhin der zu prüfende Leitungsabschnitt auf einen Prüfdruck aufgedrückt, der Druck auf dem Niveau des Prüfdrucks gehalten, indem Wasser nachgefördert wird, soweit das zur Druckerhaltung erforderlich ist, und sodann in der Ruhephase der Druckabfall in einem Zeitintervall ermittelt, um daraus eine Bewertung abzuleiten, ob die Dichtheit des Leistungsabschnitts bestätigt werden kann oder nicht. Insbesondere für Leitungsabschnitte aus viskoelastischen Materialien ist es über das System der Differentialgleichungen aber möglich, im Rahmen der Simulationsberechnungen den Anteil der Druckveränderungen, die auf materialbedingte Volumenveränderungen des Raumvolumens des zu prüfenden Leitungsabschnitts zurückzuführen sind, zumindest annäherungsweise zu berechnen. Der im Rahmen der Simulation berechnete Wert kann in die Bewertung der Dichtheit des Leitungsabschnitts einfließen, ohne dass dafür im Rahmen der Dichtheitsprüfung noch zusätzlich ein Kontraktionstest durchgeführt werden muss. Ein solcher bleibt natürlich weiterhin möglich, aber er ist nicht mehr zwingend erforderlich, um überhaupt eine Bewertung vornehmen zu können. Die Simulationsrechnung ergibt zudem genauere Ergebnisse, als es mit dem Kontraktionstest möglich ist.

Die für die Anwendung des Verfahrens erforderlichen Druckmessungen erfolgen mit einer geeigneten Druckmessvorrichtung. Eine erste Druckmessvorrichtung kann dabei in der Messvorrichtung selbst zusammen mit einer Pumpe vorhanden sein, beispielsweise, um mit dieser Druckmessvorrichtung den Prüfdruck in dem zu prüfenden Leitungsabschnitt zumindest annähernd herzustellen oder zu halten, aber auch, um Messungen für die Prüfung vorzunehmen. Die Prüfmessungen können aber auch mit einer Druckmessvorrichtung durchgeführt werden, deren Messwerte nicht durch Störsignale verfälscht sind, die beispielsweise von einer Pumpe herrühren können. Abweichungen von dem in zu prüfenden Leitungsabschnitt tatsächlich herrschenden Druck können sich auch durch Strömungswiderstände in den Zuleitungen zu dem zu prüfenden Leitungsabschnitt und/oder durch Adapterteile zwischen der Messvorrichtung und dem zu prüfenden Leitungsabschnitt ergeben. Derartige Störeinflüsse können vermieden werden, wenn eine Druckmessvorrichtung unabhängig von der übrigen Messvorrichtung, insbesondere der Pumpe, als separates Gerät an die zu prüfende Leitung angeschlossen wird oder die Pumpe als separates Gerät verwendet wird und die von dieser Druckmessvorrichtung gemessenen Druckwerte an die elektronische Recheneinheit übermittelt werden. Die als separates Gerät ausgebildete Druckmessvorrichtung kann dann eine alleinige oder eine zweite Druckmessvorrichtung bilden, die unabhängig ist von einer oder mehreren Druckmessvorrichtungen, die zusammen mit einer Pumpe in der Messvorrichtung verbaut sind.

Nach einer Ausgestaltung der Erfindung wird mit den Differentialgleichungen die zeitliche Ableitung der Dehnung des viskoelastischen Materials, die zeitliche Ableitung der Spannung des viskoelastischen Materials und die zeitliche Änderungsrate des Wasservolumens bestimmt.

Die Gleichung für die zeitliche Ableitung der Dehnung des viskoelastischen Materials entspricht dem Standard Linear Solid Model, mit dem die viskoelastischen Eigenschaften von Werkstoffen beschrieben werden. Der Zusammenhang zwischen der Dehnung, Spannung und den zeitlichen Ableitungen dieser Größen wird dabei über die Lösung eines Systems aus Differentialgleichungen hergestellt. Das Standard Linear Solid Model bietet dabei einen Kompromiss, der einerseits eine erhebliche Verbesserung und Annäherung in der Beschreibung des Verhaltens viskoelastischer Materialien an das reale Verhalten eines zu prüfenden Leitungsabschnitts im Verhältnis zum bisher praktizierten Verfahren bietet, andererseits aber nur einen beschränkten, im Rahmen einer Druckprüfung noch mit vertretbarem Aufwand durchführbaren Rechenaufwand erfordert.

Das Standard Linear Solid Model ist in der folgenden Formel als erster Gleichung beschrieben:

$$\dot{\varepsilon} = \frac{1}{E_1 + E_2} \cdot \left( \dot{\sigma} + \frac{E_2 \cdot \sigma}{\eta} - \frac{E_1 \cdot E_2 \cdot \varepsilon}{\eta} \right)$$

ε steht in dieser Gleichung für die Dehnung und σ für die Spannung des Materials. ε und σ sind die zeitlichen Ableitungen

dieser Größen. $E_1$, $E_2$ und $\eta$ sind dabei Materialkonstanten. Der Druck der Leitung lässt sich über das Volumen $V_F$ der Leitung berechnen. Es gilt:

$$V_F = V_L \cdot \frac{p_0}{p} + V_W \cdot (1 - \kappa \cdot (p - p_0))$$

Dabei ist P der Absolutdruck in der Leitung, $p_0$ der Luftdruck, $V_L$ das bei $p_0$ enthaltene Luftvolumen, $V_W$ das enthaltene Wasservolumen und $K$ die Kompressibilität von Wasser. Auflösen nach P führt zu:

$$p = \frac{V_W \cdot (1 - \kappa \cdot p_0) - V_F}{2 \cdot V_W \cdot \kappa} + \underbrace{\sqrt{\frac{(V_F - V_W \cdot (1 - \kappa \cdot p_0))^2}{4 \cdot V_W^2 \cdot \kappa^2} + \frac{V_L \cdot p_0}{V_W \cdot \kappa}}}_{Q}$$

Die Druckänderungsrate P lässt sich damit wie folgt berechnen:

$$\dot{p}(V_F, V_W, \dot{V}_F, \dot{V}_W) = \dot{V}_F \cdot \left( \frac{1}{2 \cdot V_W \cdot \kappa} + \frac{V_F - V_W \cdot (1 - \kappa \cdot p_0)}{2 \cdot V_W^2 \cdot \kappa^2 \cdot Q} \right)$$

$$+ \dot{V}_W \cdot \left( -\frac{V_F + V_W}{2 \cdot V_W^2 \cdot \kappa} + \frac{(\kappa \cdot p_0 - 2) \cdot (V_F - V_W + V_W \cdot \kappa \cdot p_0) - (V_F - V_W \cdot (1 - \kappa \cdot p_0))^2}{2 \cdot V_W^2 \cdot \kappa^2 \cdot Q} \right.$$
$$\left. - \frac{V_L \cdot p_0}{V_W^2 \cdot \kappa \cdot Q} \right)$$

$\dot{V}_F$, $\dot{V}_W$ sind entsprechend die zeitlichen Änderungsraten von Leitungsvolumen und Wasservolumen. Die Änderungsrate der Spannung ist entsprechend der Geometrie einer zylindrischen Leitung mit dem Innendurchmesser $d_i$ und der Wandstärke $s$. Das führt zu der nachfolgenden zweiten Gleichung:

$$\dot{\sigma} = \dot{p}(V_F, V_W, \dot{V}_F, \dot{V}_W) \cdot \frac{d_i}{4 \cdot s}$$

Das Leitungsvolumen $V_F$ kann mit dem Ausgangsvolumen der Leitung $V_0$ und $\varepsilon$ bestimmt werden:

$$V_F = V_0 \cdot (\varepsilon + 1)^2$$

Entsprechend ist die Änderungsrate von $V_F$:

$$\dot{V}_F = 2 \cdot V_0 \cdot \dot{\varepsilon} \cdot (\varepsilon + 1)$$

Was noch fehlt sind Wasservolumen $V_W$ und Fluss $\dot{V}_W$ Für die Betrachtung einer abgeschlossenen Leitung mit Leck kann der Fluss als linear druckabhängig angenommen werden. Also:

$$\dot{V}_W = L \cdot (p - p_0)$$

Hieraus ergibt sich die dritte Gleichung:

$$\dot{V}_W = \frac{L \cdot \sigma \cdot d_i}{4 \cdot s}$$

Für andere Randbedingungen, z.B. während der Aufdrückphase, oder einer Ablassphase muss $\overline{V}_w$ entsprechend durch Addition eines zeitabhängigen Flusses modifiziert werden.

Nach einer Ausgestaltung der Erfindung sind das Kontraktionsverhalten von viskoelastischen Materialien beschreibende Daten, die als Werte für die Bestimmung der Dehnung und der Spannung des viskoelastischen Materials und deren zeitlichen Ableitungen dienen, in einem Speicher vorgehalten, aus dem sie bei Bedarf abgerufen werden können. Der Speicher bildet eine Art Bibliothek, der die für die Simulation benötigten Daten je nach vorhandenem Leitungstyp entnommen werden können. Die Leitungstypen können nach verwendetem Material, Hersteller, Durchmesser, Wandstärken und dergleichen unterscheidbar sein. Die Qualität der Simulationsrechnung wird insbesondere beeinflusst von der Qualität der Daten, die als Werte für die Bestimmung der Dehnung und der Spannung des viskoelastischen Materials und deren zeitlichen Ableitungen zur Verfügung stehen. Der Datenspeicher kann als einfacher Speicher organisiert sein, er kann aber auch als ein neuronales Netzwerk, ein selbstlernendes System oder als ein Expertensystem ausgelegt sein, das einige oder alle vorgenommenen Prüfungen auswertet, auf Plausibilität prüft, mit dem vorhandenen Datenbestand abgleicht und diesen entsprechend ergänzt oder abändert. Mit zunehmender Zahl von durchgeführten Messungen steigt dadurch die Menge und Qualität der abrufbaren Daten, wodurch auch die Qualität der durchgeführten Prüfungen steigt. Gleichzeitig wird durch die Datensammlung die Informationsbeschaffung für die Simulation vereinfacht, da mit zunehmender Zahl von Datensätzen immer vollständigere Informationen in einer immer besseren Qualität direkt dem Speicher entnommen werden können, ohne noch auftragsspezifische Informationen individuell beschaffen und in der Messvorrichtung verfügbar machen zu müssen.

Der Speicher kann Bestandteil einer Messvorrichtung sein, die Daten können aber auch auf einem Zentralrechner abgelegt sein, auf den die Messvorrichtung über einen Kabelanschluss oder kabellos, beispielsweise über eine W-LAN- oder Mobilfunk-Verbindung, Zugriff hat, oder die Daten sind in der Cloud abgelegt und von dort abrufbar.

Nach einer Ausgestaltung der Erfindung werden während einer Druckerhöhung in dem zu prüfenden Leitungsabschnitt in einer ersten Aufdrückphase ein mittels einer Pumpe zugeführtes Volumen von Wasser und der Druck in dem Leitungsabschnitt als Funktion über die Zeit synchron registriert, der Druck in dem Leitungsabschnitt ist als Funktion von Luftmenge, zugeführter Wassermenge und effektiver Elastizitätskonstante bei bekanntem Innenvolumen des zu prüfenden Rohrabschnitts in einer mathematischen Gleichung beschrieben, und über eine Anpassung dieser Funktion an die Messdaten wird die im zu prüfenden Leitungsabschnitt vorhandene Luftmenge bestimmt.

Die Volumenbestimmung des zugeführten Wassers kann durch für sich bekannte Sensorik erfolgen. So kann dafür beispielsweise die Drehbewegung der Kolbenwelle der Wasserpumpe gemessen und in ein Fördervolumen umgerechnet werden, oder es wird der Wasserdurchfluss durch eine Zuleitung zum zu prüfenden Leitungsabschnitt mit Durchflussmengenmessern erfasst.

Durch den Abgleich der in den zu prüfenden Leitungsabschnitt eingeleiteten Wassermenge mit dem Druckverlauf, der sich dabei in dem zu prüfenden Leitungsabschnitt einstellt, kann das Volumen der im zu prüfenden Leitungsabschnitt vorhandenen Luft über eine mathematische Gleichung bestimmt werden. Da die Aufdrückphase kurz ist und im Normalfall nur wenige Minuten beträgt, kann das Leitungsmaterial in der mathematischen Gleichung bevorzugt als elastisch behandelt werden. Die Nichtberücksichtigung eventueller erster viskoelastischer Materialveränderungen während der Aufdrückphase durch den einwirkenden Druck vereinfacht hier das anzuwendende Rechenmodell ebenfalls, ohne dadurch erhebliche Fehler in der Bestimmung des in dem zu prüfenden Leitungsabschnitt vorhandenen Luftvolumens in Kauf nehmen zu müssen. In der mathematischen Gleichung ist bevorzugt außerdem die Annahme enthalten, dass die in dem zu prüfenden Leitungsabschnitt vorhandene Luftmenge konstant ist. Auch diese Annahme vereinfacht das Rechenmodell, ohne dadurch erhebliche Fehler in Kauf zu nehmen.

Wenn schon in der Aufdrückphase das in dem zu prüfenden Leitungsabschnitt vorhandene Luftvolumen bestimmt wird, steht dieser Wert bei der späteren Simulation des Kontraktionstests als Rechengröße zur Verfügung. Auf einen gesonderten Ablasstest, bei dem das Luftvolumen in dem zu prüfenden Leitungsabschnitt bestimmt wird, kann dann ebenfalls verzichtet werden, wodurch sich der Zeitaufwand für die Dichtheitsprüfung nochmals verringert. Die rechnerische bevorzugt softwaregestützte Bestimmung des Luftvolumens führt auch zu exakteren Werten für das vorhandene Luftvolumen als der standardisierte und pauschalierte Ablasstest.

Das Luftvolumen stellt eine große mögliche Fehlerquelle für die Feststellung eines Lecks und dessen Größe dar, da die Luft wie eine Feder wirkt, die eine Bestimmung des dynamischen Verhaltens der viskoelastischen Materialien erheblich erschwert. Je genauer das tatsächliche in dem zu prüfenden Leitungsabschnitt vorhandene Luftvolumen bestimmt wird, umso genauer sind auch die Ergebnisse der Dichtheitsprüfung insgesamt.

Nach einer Ausgestaltung der Erfindung wird das unter einem vorhandenen Druck berechnete Luftvolumen in einen Wert für das Luftvolumen umgerechnet, das die Luftmenge bei einem Umgebungsdruck einnimmt. Bei der Berechnung des Luftvolumens spielt der aktuell in dem zu prüfenden Leitungsabschnitt herrschende Druck eine wichtige Rolle. Um ein möglichst korrektes Luftvolumen berechnen und daraus die in dem zu prüfenden Leitungsabschnitt vorhandene Wassermenge möglichst genau bestimmen zu können, ist eine Umrechnung des Luftvolumens in einen Wert bei Umgebungsdruck erforderlich. Auch die Leckrate kann nur dann genau bestimmt werden, wenn auch der entsprechende Wert des in dem zu prüfenden Leitungsabschnitt vorhandenen Luftvolumens bekannt ist.

Nach einer Ausgestaltung der Erfindung weist die Messvorrichtung eine an eine Wasserleitung angeschlossene Pumpe auf, die mit der elektronischen Recheneinheit verbunden ist und von dieser gesteuert wird. Die Wasserleitung verbindet eine Wasserquelle mit dem zu prüfenden Leitungsabschnitt. Sie verfügt über entsprechende eingangs- und ausgangsseitige Anschlüsse und ist ein Bestandteil der Messvorrichtung. Die Pumpe saugt Wasser aus der Wasserquelle an und drückt dieses stromabwärts über einen entsprechenden Anschluss in den zu prüfenden Leitungsabschnitt. Die elektronische Recheneinheit kann die Pumpe ansteuern, um in einer Aufdrückphase den Druck in dem zu prüfenden Leitungsabschnitt auf einen Prüfdruck zu bringen. In einer Druckhaltephase kann die elektronische Recheneinheit über die Ansteuerung der Pumpe jeweils Wasser nachfördern, wenn das erforderlich ist, um in dem zu prüfenden Leitungsabschnitt den Prüfdruck zu halten. Die Steuerung der Pumpe über die elektronische Recheneinheit gewährleistet, dass die Pumpe nur genau so viel Wasser in den zu prüfenden Leitungsabschnitt einleitet, wie das für die jeweilige Prüfphase erforderlich ist. Die Steuerung der Pumpe durch die elektronische Recheneinheit kann softwaregesteuert erfolgen, so dass Betriebsabläufe automatisiert und sonst mögliche Fehlerquellen ausgeschlossen werden. Die Durchführung einer Messung wird dadurch erheblich vereinfacht. Für Dokumentationszwecke kann die Pumpentätigkeit von der elektronischen Recheneinheit auch abgespeichert werden. Schließlich kann die elektronische Recheneinheit auch Fehlerzustände der Pumpe erkennen und anzeigen, auch zur vorsorglichen Wartung, bevor diese bei einem Messeinsatz ausfällt.

Nach einer Ausgestaltung der Erfindung weist die Messvorrichtung ein Rückschlagventil auf, durch den ein Rückfluss von Wasser aus dem zu prüfenden Leitungsabschnitt in die Messvorrichtung gesperrt ist. Das Rückschlagventil ermöglicht es, Wasser von der Messvorrichtung aus in die zu prüfende Leitung hinein zu befördern, wobei ein Rückfluss des Wassers aber gesperrt ist. Durch das Rückschlagventil wird sichergestellt, dass die in den zu prüfenden Leitungsabschnitt hinein beförderte Wassermenge als Rechenwert zutreffend bleibt und die darauf aufbauenden Berechnungen richtig sind.

Nach einer Ausgestaltung der Erfindung weist die Messvorrichtung ein Mittel zur Druckmessung in dem zu prüfenden Leitungsabschnitt auf, das mit der elektronischen Recheneinheit verbunden ist. Wenn die gemessenen Druckwerte über die Verbindung an die elektronische Recheneinheit übertragen werden, können diese im Rahmen der laufenden Dichtheitsprüfung dort ausgewertet, weiterverarbeitet und gespeichert werden. Ablese-, Eingabe- und Übertragungsfehler werden auf diese Weise bestmöglich vermieden. Die Messwerte stehen der Software auch unmittelbar zur Weiterverarbeitung zur Verfügung. Ein Messvorgang wird dadurch erheblich beschleunigt. Es können auch mehrere Mittel zur Druckmessung vorhanden sein, die in der Messvorrichtung selbst und/oder in einem externen Gerät angeordnet sind, dass an die elektronische Recheneinheit und an den zu prüfenden Leitungsabschnitt über eine Kabelverbindung oder auch kabellos anschließbar ist.

Nach einer Ausgestaltung der Erfindung weist die Messvorrichtung eine Vorrichtung zur Volumenbestimmung der von der Pumpe in einem Zeitintervall beförderten Wassermenge auf. Die Volumenbestimmung kann über eine Messung der Drehbewegungen der Welle des Pumpenkolbens in der Pumpe erfolgen. Da der Hubraum der Pumpe immer eine gleiche Größe hat, ergibt sich aus der Erfassung einer Drehbewegung der Welle des Kolbens eine gute Messgröße für das von der Pumpe beförderte Volumen an Wasser. Die Volumenbestimmung ist aber auch alternativ oder zusätzlich über andere Durchflussmengenmesser, wie Zellenräder, Ultraschall, Differenzdruckmessung an einem Strömungswiderstand, eine Messturbine oder einen Vortex-Durchflussmengenmesser möglich, die ihre Sensordaten an die elektronische Recheneinheit zur Weiterverarbeitung übermitteln. Wenn die Volumenmessung parallel zur Messung des Druckwertes in dem zu prüfenden Leitungsabschnitt erfolgt, können die entsprechenden Messwerte parallel von der auf der elektronischen Recheneinheit laufenden Software erfasst und ausgewertet werden, beispielsweise für die Bestimmung des Luftvolumens in dem zu prüfenden Leitungsabschnitt.

Nach einer Ausgestaltung der Erfindung weist die Messvorrichtung eine Vorrichtung zur Schallmessung aus dem zu prüfenden Leitungsabschnitt auf, die mit der elektronischen Recheneinheit verbunden ist. Über die Vorrichtung zur Schallmessung kann die Messvorrichtung feststellen, ob vor, während oder nach der Zuförderung von Wasser in den zu prüfenden Leitungsabschnitt Strömungsgeräusche auftreten, die auf ein Leck in dem zu prüfenden Leitungsabschnitt hinweisen. Die Schallmessung kann insbesondere bei einer abgeschalteten Pumpe vorgenommen werden, damit die Messung nicht durch Pumpengeräusche gestört wird. Wenn die Strömungsgeräusche sehr deutlich wahrzunehmen sind und/oder zusätzlich ein Druckanstieg in dem zu prüfenden Leitungsabschnitt gänzlich ausfällt oder nur sehr langsam erfolgt, obwohl ständig Wasser zugeführt wird, kann das ein Kriterium für den Abbruch der Prüfung sein, das angezeigt wird oder zu einem automatischen Abbruch einer laufenden Messung führt.

Nach einer Ausgestaltung der Erfindung weist die elektronische Recheneinheit eine Software auf, die in einer Kontrollschleife die Prüfbarkeit des zu prüfenden Leitungsabschnitts bewertet und das Ergebnis der Bewertung über eine an der Messvorrichtung vorhandene Anzeige anzeigt und/oder den Messvorgang automatisch abbricht. Vorstehend ist bereits der Messabbruch wegen deutlicher Strömungsgeräusche und/oder eines ausbleibenden Druckanstiegs angesprochen worden. Darüber hinaus können weitere oder andere Prüfkriterien in der elektronischen Recheneinheit abgelegt sein, die von einer Kontrollschleife vor oder während einer Messung abgearbeitet werden. Bei einer positiven Feststellung von Prüfkriterien, die die Prüfbarkeit der zu prüfenden Leitung ausschließen, kann die elektronische Recheneinheit den Prüfvorgang automatisch abbrechen und/oder eine entsprechende Warnmeldung anzeigen.

Nach einer Ausgestaltung der Erfindung weist die elektronische Recheneinheit eine Kommunikationsschnittstelle auf, über die für die Messung benötigte Daten in die Software importiert und Messergebnisse und/oder bei der Messung ermittelte Daten exportiert werden können. Der Datenaustausch über die Kommunikationsschnittstelle ermöglicht es, der elektronischen Recheneinheit diejenigen Daten zuzuleiten, die diese benötigt, um die geforderte Dichtheitsprüfung ausführen zu können, die nicht schon in einem Speicher abgelegt sind, der direkt an die elektronische Recheneinheit angeschlossen ist. Der Datenaustausch kann kabelgebunden oder kabellos, beispielsweise über ein Mobilfunknetz, erfolgen. Die Kommunikationsschnittstelle kann mit der elektronischen Recheneinheit beispielsweise über einen Datenbus verbunden sein, über den ein Datenaustausch abgewickelt und die entsprechenden Kommunikationsbefehle und -freigaben übermittelt werden können.

Nach einer Ausgestaltung der Erfindung weist die elektronische Recheneinheit einen Speicher auf, in dem für die Messung benötigte Daten und/oder bei der Messung ermittelte Daten von der Software abgelegt werden können. Je nach Messort kann es vorteilhaft sein, entsprechende Daten in einem Speicher ablegen zu können, der sich direkt in der Messvorrichtung selbst befindet oder kabelgebunden mit dieser verbunden ist. So ist es möglich, dass an einem Messort kein Mobilfunk verfügbar ist, so dass ohne eine Mobilfunkverbindung eine Messung ausfallen müsste, da die dafür erforderlichen Daten nicht über die Mobilfunkverbindung verfügbar gemacht werden können. Hier wäre dann eine vorbereitende Ablage der benötigten Daten bei Netzverfügbarkeit im Speicher möglich, bevor der Messort aufgesucht wird. Genauso ist es möglich, die bei einer Messung ermittelten Daten später auszuwerten oder an andere Rechner zur Weiterverarbeitung weiterzuleiten.

Nach einer Ausgestaltung der Erfindung bietet die elektronische Recheneinheit eine Auswahlmöglichkeit, ob vor oder nach der Druckmessung während der Druckhaltephase noch ein Ablasstest und/oder ein Kontraktionstest von der Messvorrichtung ausgeführt werden soll. Eine Bedienperson, die die Dichtheitsprüfung ausführt, kann je nach eigenem Wunsch oder nach dem Wunsch des Kunden noch einen Ablasstest und/oder einen Kontraktionstest ausführen, der von der Messvorrichtung dann maschinell mit bevorzugt automatisierten Abläufen unterstützt werden kann. Damit ist die Messvorrichtung auch in Fällen einsetzbar, in denen Kunden eine konventionelle Dichtheitsprüfung wünschen.

Nach einer Ausgestaltung der Erfindung ist die Druckmessvorrichtung als ein von der Messvorrichtung separates Gerät ausgebildet, das die von der Druckmessvorrichtung gemessenen Druckwerte an die elektronische Recheneinheit über eine Funkverbindung oder eine Kabelverbindung überträgt. Durch die Verwendung einer Druckmessvorrichtung, die als ein von der übrigen Messvorrichtung separates Gerät ausgestaltet ist, sind die davon ermittelten Messwerte weniger fehlerbehaftet. Die elektronische Messeinheit kann dabei auch ein Bestandteil des separaten Geräts sein und die Messergebnisse auswerten.

Nach einer Ausgestaltung der Erfindung sind die elektronische Recheneinheit und die darauf ablaufende Software ausgestattet, um ein Verfahren gemäß einem der Ansprüche 2 bis 5 auszuführen.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:

Fig. 1:     eine Ansicht auf eine Messvorrichtung,

Fig. 2:     eine Ansicht auf eine alternative Ausführung der Messvorrichtung,

Fig. 3:     eine Ansicht auf eine weitere Ausführung der Messvorrichtung,

Fig. 4:     eine Übersicht über die verschiedenen Prüfphasen und die dabei ermittelten Größen,

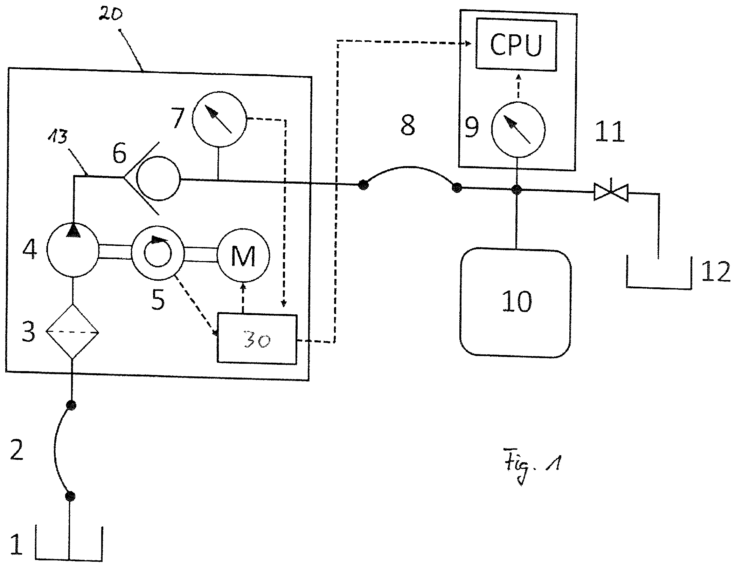

In Fig. 1 ist ein Wasserbehälter 1 gezeigt, aus dem über einen Schlauch 2 durch einen Partikelfilter 3 hindurch mit einer Pumpe 4 Wasser angesaugt werden kann, um dieses in einen zu prüfenden Leitungsabschnitt 10 zu befördern. Die Pumpe 4 ist in eine Messvorrichtung 20 eingebaut. An die Pumpe 4 ist eine Vorrichtung 5 zur Volumenbestimmung der von der Pumpe 4 in einem Zeitintervall beförderten Wassermenge angeschlossen. In dem in Fig. 1 dargestellten Ausführungsbeispiel handelt es sich um eine Drehzahlerfassung der Welle des Pumpenkolbens. Das durch die Wasserleitung 13 hindurch strömende Wasser wird von dem Rückschlagventil 6 daran gehindert, in die Richtung des Wasserbehälters 1 zurückzulaufen.

In der Messvorrichtung 20 ist eine erste Druckmessvorrichtung 7 vorhanden, die die von ihre gemessenen Druckwerte an die elektronische Recheneinheit 30 überträgt. Die Messvorrichtung 20 ist über einen druckfesten Schlauch 8 mit dem zu prüfenden Leitungsabschnitt 10 verbunden. An den zu prüfenden Leitungsabschnitt 10 kann eine zusätzliche zweite Druckmessvorrichtung 9 angeschlossen sein, die als separates Gerät ausgebildet ist und mit der der jeweils aktuelle Druck in dem zu prüfenden Leitungsabschnitt 10 gemessen wird. Die Messungen der zweiten Druckmessvorrichtung 9 sind genauer, weil die von ihr ermittelten Messergebnisse nicht so stark verfälscht sind durch den Pumpenbetrieb, wie das bei der Druckmessvorrichtung 7 der Fall ist. Der jeweilige Messwert kann an die elektronische Recheneinheit 20 übertragen werden. Die Druckmessvorrichtung 9 kann eine zusätzliche Vorrichtung 5 zur Volumenbestimmung des in den Leitungsabschnitt 10 eingeflossenen Wasservolumens aufweisen. Das in dem Leitungsabschnitt 10 befindliche Wasser kann über ein Ablassventil 11 in einen Auffangbehälter 12 abgelassen werden.

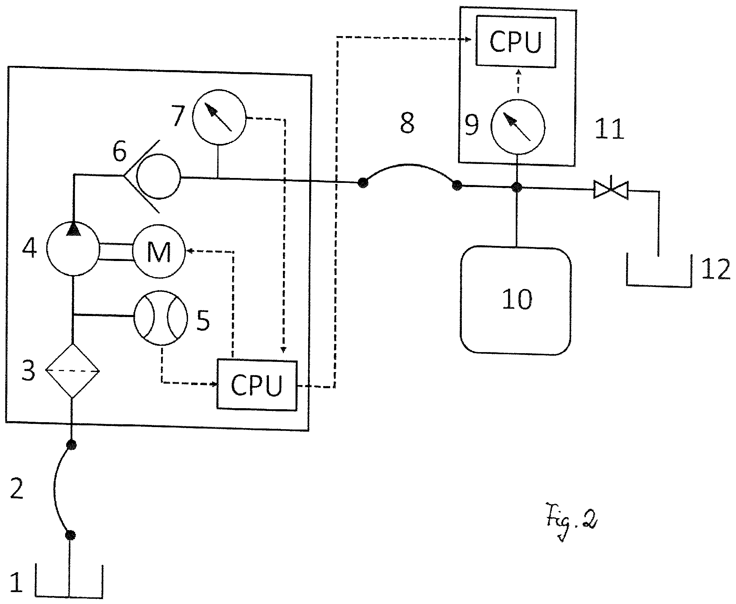

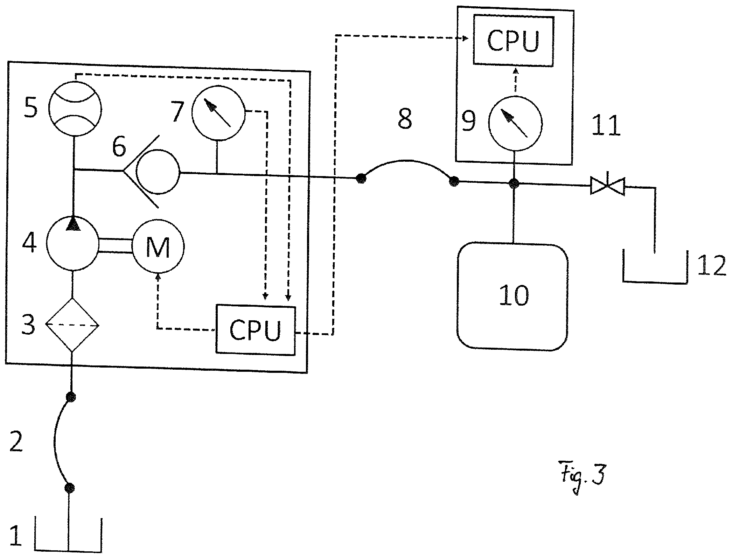

In Fig. 2 ist eine Version der Messvorrichtung 20 gezeigt, bei der eine Vorrichtung 5 zur Volumenbestimmung der Pumpe 4 in Durchflussrichtung des Wassers gesehen vorgeordnet ist. In Fig. 3 ist die Vorrichtung 5 zur Volumenbestimmung der Pumpe 4 nachgeordnet. Die Vorrichtungen 5 zur Volumenbestimmung der Pumpe 4 sind jeweils mit der elektronischen Recheneinheit 30 verbunden, um dieser die von ihnen ermittelten Messwerte zu übermitteln.

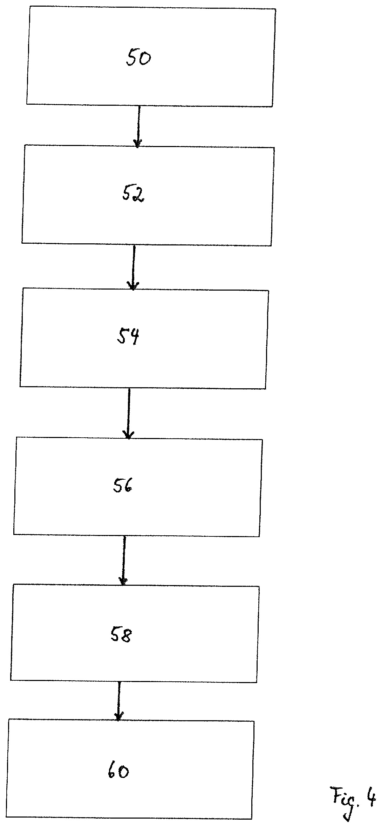

In Fig. 4 sind die verschiedenen Prüfphasen und die dabei ermittelten Größen dargestellt. Begonnen wird mit der Ruhephase 50. In einer Aufdrückphase 52 wird der Wasserdruck in dem Leitungsabschnitt 10 auf einen Prüfdruck gesteigert. Der Prüfdruck kann dem Betriebsdruck entsprechen, er kann aber auch höher oder tiefer liegen. Dabei kann eine Luftmengenbestimmung erfolgen. Bei einem zu hohen Luftanteil kann der Prüfvorgang an dieser Stelle abgebrochen werden.

Es folgt eine Druckhaltephase 54, in der der Druck in dem Leitungsabschnitt auf der Höhe des Prüfdrucks gehalten wird. Dabei können massive Lecks in dem Leitungsabschnitt erkannt werden. Auch hier ist ein Abbruch des Prüfvorgangs möglich.

In der nachfolgenden Ruhephase 56 wird der Druckabfall im Leitungsabschnitt 10 beobachtet, um daraus die Leckmenge zu bestimmen. Danach kann die Dichtheitsprüfung abgeschlossen werden, wenn nicht besondere Prüfvorschriften zu beachten sind, wie beispielsweise bei Lufteinschlüssen im Leitungsabschnitt 10 oder bei Wasserleitungen, die aus viskoelastischen Materialien hergestellt sind. Nach herkömmlicher Prüftechnik wird zur Bestimmung des Luftvolumens bei Lufteinschlüssen der Ablasstest 58 durchgeführt, der ebenfalls bei Erkennung eines Lecks abgebrochen werden kann. Nach der vorliegenden Erfindung kann die Luftvolumenbestimmung schon während der Aufdrückphase 52 erfolgen. Zur Feststellung des Dehnungs- und Schrumpfungsverhaltens der viskoelastischen Materialien wird nach herkömmlicher Prüftechnik der Kontraktionstest 60 durchgeführt, der gemäß der vorliegenden Erfindung durch eine Simulationsrechnung ersetzt werden kann.

Die Erfindung ist nicht auf die vorstehenden Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

## Patentansprüche

1. Verfahren zur Dichtheitsprüfung von definierten Leitungsabschnitten (10) von Wasserleitungen, deren Rohrleitungen aus einem viskoelastischen Material bestehen, indem dem zu prüfenden Leitungsabschnitt (10) bis zur Erreichung eines Prüfdruckes Wasser zugeführt, der Druck in dem zu prüfenden Leitungsabschnitt (10) gemessen und der Druckverlauf im Leitungsabschnitt (10) in der Ruhephase (56) als Funktion über die Zeit registriert und der dabei auftretende Druckabfall mit einem erwarteten Druckverlauf unter Berücksichtigung des in dem zu prüfenden Leitungsabschnitt (10) vorhandenen Luftvolumens verglichen wird, **dadurch gekennzeichnet, dass** im Messverlauf ein Kontraktionstest (60) mittels einer Simulation von im Zeitverlauf zu erwartenden materialbedingten Volumenveränderungen mit einem System von das Kontraktionsverhalten von viskoelastischen Materialien beschreibenden Differentialgleichungen durchgeführt wird.

2. Verfahren nach Anspruch 1, **dadurch gekennzeichnet, dass** mit den Differentialgleichungen die zeitliche Ableitung der Dehnung des viskoelastischen Materials, die zeitliche Ableitung der Spannung des viskoelastischen Materials und die zeitliche Änderungsrate des Wasservolumens bestimmt werden.

3. Verfahren nach Anspruch 1 oder 2, **dadurch gekennzeichnet, dass** das Kontraktionsverhalten von viskoelastischen Materialien beschreibende Daten, die als Werte für die Bestimmung der Dehnung und der Spannung des viskoelastischen Materials und deren zeitlichen Ableitungen dienen, in einem Speicher vorgehalten sind, aus dem sie bei Bedarf abgerufen werden können.

4. Verfahren nach einem der vorhergehenden Ansprüche, **dadurch gekennzeichnet, dass** während einer Druckerhöhung in dem zu prüfenden Leitungsabschnitt (10) in einer ersten Aufdrückphase (52) ein mittels einer Pumpe (4) zugeführtes Volumen von Wasser und der Druck in dem Leitungsabschnitt (10) als Funktion über die Zeit synchron registriert werden, der Druck in dem Leitungsabschnitt (10) als Funktion von Luftmenge, zugeführter Wassermenge und effektiver Elastizitätskonstante bei bekanntem Innenvolumen des zu prüfenden Rohrabschnitts in einer mathematischen Gleichung beschrieben ist, und über eine Anpassung dieser Funktion an die Messdaten die im zu prüfenden Leitungsabschnitt (10) vorhandene Luftmenge bestimmt wird.

5. Verfahren nach einem der vorhergehenden Ansprüche, **dadurch gekennzeichnet, dass** das unter einem vorhandenen Druck berechnete Luftvolumen in einen Wert für das Luftvolumen umgerechnet wird, das die Luftmenge bei einem Umgebungsdruck einnimmt.

6. Messvorrichtung (20) zur Dichtheitsprüfung von definierten Leitungsabschnitten (10) von Wasserleitungen, deren Rohrleitungen aus einem viskoelastischen Material bestehen, mit einer Fördervorrichtung zur Zuführung von Wasser in den zu prüfenden Leitungsabschnitt (10), einer Druckmessvorrichtung (7, 9) zur Messung des aktuellen Drucks in dem zu prüfenden Leitungsabschnitt (10), **dadurch gekennzeichnet, dass** die Messvorrichtung (20) eine elektronische Recheneinheit (30) aufweist, die mit der Druckmessvorrichtung (7, 9) verbunden ist und die eine Software aufweist, die über die Verbindung die von der Druckmessvorrichtung (7, 9) während eines Messverlaufs ermittelten Druckwerte ausliest, zwischenspeichert und verarbeitet, wobei die Software eine Programmierung aufweist, die im Messverlauf einen Kontraktionstest (60) mittels einer Simulation von im Zeitverlauf zu erwartenden materialbedingten Volumenveränderungen mit einem System von das Kontraktionsverhalten von viskoelastischen Materialien beschreibenden Differentialgleichungen durchführt.

7. Messvorrichtung (20) nach Anspruch 6, **dadurch gekennzeichnet, dass** mit den Differentialgleichungen die zeitliche Ableitung der Dehnung des viskoelastischen Materials, die zeitliche Ableitung der Spannung des viskoelastischen Materials und die zeitliche Änderungsrate des Wasservolumens bestimmt wird.

8. Messvorrichtung (20) nach Anspruch 6 oder 7, **dadurch gekennzeichnet, dass** die Messvorrichtung (20) eine an eine Wasserleitung (13) angeschlossene Pumpe (4) aufweist, die mit der elektronischen Recheneinheit (30) verbunden ist und von dieser gesteuert wird.

9. Messvorrichtung (20) nach einem der vorhergehenden Ansprüche 6 bis 8, **dadurch gekennzeichnet, dass** die Messvorrichtung (20) ein Rückschlagventil aufweist, durch den ein Rückfluss von Wasser aus dem zu prüfenden Leitungsabschnitt (10) in die Messvorrichtung gesperrt ist

10. Messvorrichtung (20) nach einem der vorhergehenden Ansprüche 6 bis 9, **dadurch gekennzeichnet, dass** die Messvorrichtung (20) ein Mittel zur Druckmessung in dem zu prüfenden Leitungsabschnitt (10) aufweist, das mit der elektronischen Recheneinheit (30) verbunden ist.

11. Messvorrichtung (20) nach einem der vorhergehenden Ansprüche 6 bis 10, **dadurch gekennzeichnet, dass** die Messvorrichtung (20) eine Vorrichtung (5) zur Volumenbestimmung der von der Pumpe (4) in einem Zeitintervall beförderten Wassermenge aufweist.

12. Messvorrichtung (20) nach einem der vorhergehenden Ansprüche 6 bis 11, **dadurch gekennzeichnet, dass** die Messvorrichtung (20) eine Vorrichtung zur Schallmessung aus dem zu prüfenden Leitungsabschnitt (10) aufweist, die mit der elektronischen Recheneinheit (30) verbunden ist.

13. Messvorrichtung (20) nach einem der vorhergehenden Ansprüche 6 bis 12, **dadurch gekennzeichnet, dass** die elektronische Recheneinheit (30) eine Software aufweist, die in einer Kontrollschleife die Prüfbarkeit des zu prüfenden Leitungsabschnitts (10) bewertet und das Ergebnis der Bewertung über eine an der Messvorrichtung (20) vorhandene Anzeige anzeigt und/oder den Messvorgang automatisch abbricht.

14. Messvorrichtung (20) nach einem der vorhergehenden Ansprüche 6 bis 13, **dadurch gekennzeichnet, dass** die elektronische Recheneinheit (30) eine Kommunikationsschnittstelle aufweist, über die für die Messung benötigte Daten in die Software importiert und Messergebnisse und/oder bei der Messung ermittelte Daten exportiert werden können.

15. Messvorrichtung (20) nach einem der vorhergehenden Ansprüche 6 bis 14, **dadurch gekennzeichnet, dass** die elektronische Recheneinheit (30) einen Speicher aufweist, in dem für die Messung benötigte Daten und/oder bei der Messung ermittelte Daten von der Software abgelegt werden können.

16. Messvorrichtung (20) nach einem der vorhergehenden Ansprüche 6 bis 15, **dadurch gekennzeichnet, dass** die elektronische Recheneinheit (30) eine Auswahlmöglichkeit bietet, ob vor oder nach der Druckmessung während der Druckhaltephase (54) noch ein Ablasstest (58) und/oder ein Kontraktionstest (60) von der Messvorrichtung (20) ausgeführt werden soll.

17. Messvorrichtung (20) nach einem der vorhergehenden Ansprüche 6 bis 16, **dadurch gekennzeichnet, dass** die Druckmessvorrichtung (9) als ein von der Messvorrichtung (20) separates Gerät ausgebildet ist, das die von der Druckmessvorrichtung (9) gemessenen Druckwerte an die elektronische Recheneinheit (30) über eine Funkverbindung oder eine Kabelverbindung überträgt.

18. Messvorrichtung (20) nach einem der vorhergehenden Ansprüche 6 bis 17, **dadurch gekennzeichnet, dass** die elektronische Recheneinheit (30) und die darauf ablaufende Software ausgestattet sind, um ein Verfahren gemäß einem der vorstehenden Ansprüche 2 bis 5 auszuführen.

**Claims**

1. A method for leak testing of defined pipe sections (10) of water pipes whose tube pipes consist of a viscoelastic material, by supplying water to the pipe section (10) to be tested until a test pressure is reached, measuring the pressure in the pipe section (10) to be tested and registering the pressure curve in the pipe section (10) in the rest phase (56) as a function over time and comparing the thus occurring pressure drop with an expected pressure curve under consideration of the air volume present in the pipe section (10) to be tested, **characterised in that** during the measuring process, a contraction test (60) is performed by means of a simulation of material-related volume changes to be expected in the course of time with a system of differential equations describing the contraction behaviour of viscoelastic materials.

2. The method according to claim 1, **characterised in that** the temporal derivation of the elongation of the viscoelastic material, the temporal derivation of the tension of the viscoelastic material and the temporal rate of change of the water volume are determined with the differential equations.

3. The method according to claim 1 or 2, **characterised in that** data describing the contraction behaviour of viscoelastic materials, which serve as values for the determination of the elongation and the tension of the viscoelastic material and their temporal derivations, are kept in a memory from which they can be retrieved if needed.

4. The method according to one of the preceding claims, **characterised in that** during a pressure increase in the pipe section (10) to be tested, in a first press-on phase (52), a volume of water supplied by means of a pump (4) and the pressure in the pipe section (10) are registered synchronously as a function over time, the pressure in the pipe section (10) is described in a mathematic equation as a function of amount of air, supplied amount of water and effective elastic constant with known interior volume of the pipe section to be tested, and the amount of air present in the pipe section (10) to be tested is determined via an adaptation of this function to the measuring data.

5. The method according to one of the preceding claims, **characterised in that** the air volume calculated under a present pressure is converted into a value for the air volume which the amount of air takes at an environmental pressure.

6. A measuring device (20) for leak testing of defined pipe sections (10) of water pipes whose tube pipes consist of a viscoelastic material, with a supply device for supplying water into the pipe section (10) to be tested, a pressure measuring device (7, 9) for measuring the present pressure in the pipe section (10) to be tested, **characterised in that** the measuring device (20) has an electronic calculation unit (30) which is connected to the pressure measuring device (7, 9) and which has a software which reads out, caches and processes the pressure values determined by the pressure measuring device (7,9) during a measuring process via the connection, wherein the software has a programming which, in the measuring process, performs a contraction test (60) by means of a simulation of material-related volume changes to be expected in the course of time with a system of differential equations describing the contraction behaviour of viscoelastic materials.

**7.** The measuring device (20) according to claim 6, **characterised in that** the temporal derivation of the elongation of the viscoelastic material, the temporal derivation of the tension of the viscoelastic material and the temporal rate of change of the water volume are determined with the differential equations.

**8.** The measuring device (20) according to claim 6 or 7, **characterised in that** the measuring device (20) has a pump (4) connected to a water pipe (13) which is connected to and controlled by the electronic calculation unit (30).

**9.** The measuring device (20) according to one of the preceding claims 6 to 8, **characterised in that** the measuring device (20) has a return valve through which a return of water from the pipe section (10) to be tested into the measuring device is blocked.

**10.** The measuring device (20) according to one of the preceding claims 6 to 9, **characterised in that** the measuring device (20) has a means for measuring the pressure in the pipe section (10) to be tested which is connected to the electronic calculation unit (30).

**11.** The measuring device (20) according to one of the preceding claims 6 to 10, **characterised in that** the measuring device (20) has a device (5) for determining the volume of the amount of water to be transported by the pump (4) in a time interval.

**12.** The measuring device (20) according to one of the preceding claims 6 to 11, **characterised in that** the measuring device (20) has a device for measuring the sound from the pipe section (10) to be tested which is connected to the electronic calculation unit (30).

**13.** The measuring device (20) according to one of the preceding claims 6 to 12, **characterised in that** the electronic calculation unit (30) has a software which evaluates the testability of the pipe section (10) to be tested in a control loop and displays the result of the evaluation via a display present on the measuring device (20) and/or automatically interrupts the measuring process.

**14.** The measuring device (20) according to one of the preceding claims 6 to 13, **characterised in that** the electronic calculation unit (30) has a communication interface via which data required for the measurement can be imported into the software and measuring results and/or data determined during measuring can be exported.

**15.** The measuring device (20) according to one of the preceding claims 6 to 14, **characterised in that** the electronic calculation unit (30) has a memory in which the data required for the measurement and/or data determined during measuring can be filed by the software.

**16.** The measuring device (20) according to one of the preceding claims 6 to 15, **characterised in that** the electronic calculation unit (30) has a selection option whether a drain test (58) and/or a contraction test (60) should be executed by the measuring device (20) before or after the pressure measurement during the pressure holding phase (54).

**17.** The measuring device (20) according to one of the preceding claims 6 to 16, **characterised in that** the pressure measuring device (9) is formed as an apparatus separate from the measuring device (20) which transfers the pressure values measured by the pressure measuring device (9) to the electronic calculation unit (30) via a radio connection or a cable connection.

**18.** The measuring device (20) according to one of the preceding claims 6 to 17, **characterised in that** the electronic calculation unit (30) and the software running thereon are equipped in order to execute a method according to one of the preceding claims 2 to 5.

**Revendications**

**1.** Procédé permettant de vérifier l'étanchéité de sections de conduite (10) définies de conduites d'eau, dont les conduites sont constituées d'un matériau viscoélastique, la section de conduite (10) à vérifier étant alimentée en eau jusqu'à ce qu'une pression d'essai soit atteinte, la pression dans la section de conduite (10) à vérifier étant mesurée et la courbe de pression dans la section de conduite (10) étant enregistrée dans la phase de repos (56) en fonction du temps, et la chute de pression qui se produit ainsi étant comparée à une courbe de pression attendue en tenant compte du volume d'air présent dans la section de conduite (10) à vérifier, **caractérisé en ce qu'**un test de contraction (60) est effectué au cours de la mesure au moyen d'une simulation des changements de volume liés au matériau susceptibles de se produire au cours du temps avec un système d'équations différentielles décrivant le comportement de contraction des matériaux viscoélastiques.

2. Procédé selon la revendication 1, **caractérisé en ce que** les équations différentielles sont utilisées pour déterminer la dérivée temporelle de l'allongement du matériau viscoélastique, la dérivée temporelle de la tension du matériau viscoélastique et la vitesse de variation temporelle du volume d'eau.

3. Procédé selon la revendication 1 ou 2, **caractérisé en ce que** des données décrivant le comportement de contraction des matériaux viscoélastiques, qui sont utilisées comme valeurs pour déterminer l'allongement et la tension du matériau viscoélastique et leurs dérivées temporelles, sont stockées dans une mémoire à partir de laquelle elles sont consultables si nécessaire.

4. Procédé selon l'une des revendications précédentes, **caractérisé en ce que**, lors d'une augmentation de pression dans la section de conduite (10) à vérifier dans une première phase de pressage (52), un volume d'eau fourni au moyen d'une pompe (4) et la pression dans la section de conduite (10) sont enregistrés de manière synchrone en fonction du temps, la pression dans la section de conduite (10) est décrite en fonction de la quantité d'air, de la quantité d'eau fournie et de la constante d'élasticité effective avec un volume interne connu de la section de conduite à vérifier dans une équation mathématique, et la quantité d'air présente dans la section de conduite (10) à vérifier est déterminée par une adaptation de cette fonction aux données de mesure.

5. Procédé selon l'une des revendications précédentes, **caractérisé en ce que** le volume d'air calculé sous une pression existante est converti en une valeur pour le volume d'air que la quantité d'air occupe à une pression ambiante.

6. Dispositif de mesure (20) permettant de vérifier l'étanchéité de sections de conduite (10) définies de conduites d'eau, dont les conduites sont constituées d'un matériau viscoélastique, comportant un dispositif d'acheminement pour alimenter en eau la section de conduite (10) à vérifier, un dispositif de mesure de pression (7, 9) pour mesurer la pression actuelle dans la section de conduite (10) à vérifier, **caractérisé en ce que** le dispositif de mesure (20) présente une unité de calcul électronique (30) qui est reliée au dispositif de mesure de pression (7, 9) et qui présente un logiciel qui, par l'intermédiaire de la connexion, lit, stocke temporairement et traite les valeurs de pression déterminées par le dispositif de mesure de pression (7, 9) pendant un processus de mesure, dans lequel le logiciel présente une programmation qui exécute un test de contraction (60) au cours de la mesure au moyen d'une simulation des changements de volume liés au matériau susceptibles de se produire au cours du temps avec un système d'équations différentielles décrivant le comportement de contraction des matériaux viscoélastiques.

7. Dispositif de mesure (20) selon la revendication 6, **caractérisé en ce que** les équations différentielles sont utilisées pour déterminer la dérivée temporelle de l'allongement du matériau viscoélastique, la dérivée temporelle de la tension du matériau viscoélastique et la vitesse de variation temporelle du volume d'eau.

8. Dispositif de mesure (20) selon la revendication 6 ou 7, **caractérisé en ce que** le dispositif de mesure (20) présente une pompe (4) raccordée à une conduite d'eau (13) et reliée à l'unité de calcul électronique (30) et commandée par celle-ci.

9. Dispositif de mesure (20) selon l'une des revendications précédentes 6 à 8, **caractérisé en ce que** le dispositif de mesure (20) présente un clapet anti-retour permettant de bloquer un reflux d'eau dans l'appareil de mesure provenant de la section de conduite (10) à vérifier .

10. Dispositif de mesure (20) selon l'une des revendications précédentes 6 à 9, **caractérisé en ce que** le dispositif de mesure (20) présente un moyen de mesure de la pression dans la section de conduite (10) à vérifier, lequel moyen est relié à l'unité de calcul électronique (30).

11. Dispositif de mesure (20) selon l'une des revendications précédentes 6 à 10, **caractérisé en ce que** le dispositif de mesure (20) présente un dispositif (5) pour déterminer le volume de la quantité d'eau acheminée par la pompe (4) dans un intervalle de temps.

12. Dispositif de mesure (20) selon l'une des revendications précédentes 6 à 11, **caractérisé en ce que** le dispositif de mesure (20) présente un dispositif pour mesurer le son provenant de la section de conduite (10) à vérifier, lequel dispositif est relié à l'unité de calcul électronique (30).

13. Dispositif de mesure (20) selon l'une des revendications précédentes 6 à 12, **caractérisé en ce que** l'unité de calcul électronique (30) présente un logiciel qui évalue la testabilité de la section de conduite (10) à vérifier dans une boucle de régulation et affiche le résultat de l'évaluation par l'intermédiaire d'un affichage présente sur le dispositif de mesure (20) et/ou interrompt automatiquement le processus de mesure.

14. Dispositif de mesure (20) selon l'une des revendications précédentes 6 à 13, **caractérisé en ce que** l'unité de calcul électronique (30) présente une interface de communication par l'intermédiaire de laquelle les données nécessaires à la mesure peuvent être importées dans le logiciel et les résultats de mesure et/ou les données déterminées lors de la mesure peuvent être exportés.

15. Dispositif de mesure (20) selon l'une des revendications précédentes 6 à 14, **caractérisé en ce que** l'unité de calcul électronique (30) présente une mémoire dans laquelle les données nécessaires à la mesure et/ou les données déterminées lors de la mesure peuvent être stockées par le logiciel.

16. Dispositif de mesure (20) selon l'une des revendications précédentes 6 à 15, **caractérisé en ce que** l'unité de calcul électronique (30) offre la possibilité de choisir d'effectuer ou non encore un test de décharge (58) et/ou un test de contraction (60) par le dispositif de mesure (20), avant ou après la mesure de pression pendant la phase de maintien de pression (54).

17. Dispositif de mesure (20) selon l'une des revendications précédentes 6 à 16, **caractérisé en ce que** le dispositif de mesure de pression (9) est conçu comme un appareil distinct du dispositif de mesure (20), qui transmet les valeurs de pression mesurées par le dispositif de mesure de pression (9) à l'unité de calcul électronique (30) par l'intermédiaire d'une liaison radio ou d'une connexion par câble.

18. Dispositif de mesure (20) selon l'une des revendications précédentes 6 à 17, **caractérisé en ce que** l'unité de calcul électronique (30) et le logiciel qui s'exécute sur celle-ci sont équipés pour mettre en oeuvre un procédé selon l'une des revendications précédentes 2 à 5.

Fig. 1

EP 3 760 997 B1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005056081 A1
- US 2013081449 A1